# FASCICULE DE BREVET EUROPEEN

(11) **EP 1 520 476 B1**
(45) Date de publication et mention de la délivrance du brevet: **13.12.2006**
(21) Numéro de dépôt: 04077710.4
(22) Date de dépôt: 04.10.2004
(51) Int. Cl.: A21C 5/08

(54) **Dispositif de découpe automatique de pâte en pâtons**
Vorrichtung zum automatischen Schneiden von Teiglingen aus Teig
Apparatus for automatic cutting of dough into dough pieces

(30) Priorité: 02.10.2003 BE 200300517
(43) Date de publication de la demande: 06.04.2005
(73) Titulaire: Jac s.a., 4000 Sclessin-Liège (BE)
(72) Inventeur: Van Cauwenberghe Baudouin, B-1652 Alsemberg (BE)
(74) Mandataire: Quintelier, Claude

(56) Documents cités:
- FR-A- 2 758 052
- FR-A- 2 831 024
- US-A- 4 427 378

## Description

La présente invention se rapporte à un dispositif de découpe automatique d'un volume de pâte alimentaire introduit dans le dispositif en pâtons. De tels dispositifs sont utilisés en boulangerie artisanale ou industrielle pour façonner automatiquement des pâtons d'une masse souhaitée. Ils comprennent une cuve généralement cylindrique dont le fond est percé de rainures permettant à un ensemble de lames escamotables de pénétrer et d'être retirées de la cuve, généralement au moyen d'un premier moteur couplé auxdites lames et actionnant un vérin hydraulique, pour assurer la découpe du volume de pâte dont elle est remplie en pâtons. Cette cuve est également munie d'un couvercle pouvant être déplacé entre une première position d'ouverture dans laquelle le volume de pâtre à diviser en pâtons est introduit dans la cuve et les pâtons formés évacués de ladite cuve et une seconde position fermée dans laquelle la pâte est divisée en pâton par les lames qui en cours de division traversent la cuve de part en part axialement et viennent affleurer la face intérieure à la cuve du couvercle. Le fond de telles cuves peut généralement être déplacé axialement dans la cuve au moyen d'un second moteur couplé audit fond et actionnant un second vérin hydraulique, de manière à pouvoir compresser la pâte dans la cuve de sorte à ce qu'elle se répartisse uniformément dans cette dernière avant l'opération de découpe en pâtons par les lames et à pouvoir ensuite évacuer ces pâtons de la cuve en les poussant à l'extérieur une fois le couvercle ouvert. Le couvercle de la cuve y est monté de façon pivotante entre ses première et deuxième positions et comprend un moyen de fermeture de sécurité tel un verrou, agencé pour bloquer le couvercle en position de fermeture sur la cuve pendant le fonctionnement du dispositif.
Pour éviter que la pâte introduite dans le dispositif ne colle à ses parois intérieures, aux lames ainsi qu'à la face intérieure du couvercle, le boulanger saupoudre de la farine dans la cuve et sur la pâte lors de son introduction dans le dispositif. Lors de l'étape de compression de la pâte préalable à celle de découpe en pâton, l'excès de farine saupoudrée et d'air contenu dans la cuve sont chassés de cette dernière par au moins un orifice prévu à cet effet entre le bord supérieur de ladite cuve et le couvercle, orifice ouvert sur un conduit d'évacuation de cette farine vers un réceptacle disposé à l'extérieur de la cuve.
Un dispositif du type décrit ci-dessus est par exemple divulgué par la demande de brevet français 2 758 052.
Pour assurer l'étanchéité de la fermeture de la cuve par son couvercle pendant le fonctionnement du dispositif, FR 2 758 052 prévoit de munir l'extrémité supérieure de la cuve d'un joint d'étanchéité périphérique avec lequel coopère par complémentarité de forme une arrête sensiblement circulaire ménagée sur la face du couvercle en regard de la cuve en position fermée dudit couvercle, ladite arrête étant interrompue dans une zone délimitant un orifice d'évacuation de farine en communication avec des moyens de récupération de cette farine prévus à l'extérieur de la cuve.
La présence d'un joint d'étanchéité au niveau du bord supérieur de la cuve présente plusieurs inconvénients. Tout d'abord, ce joint crée une discontinuité dans le bord de la cuve, qui est propice à l'encrassement par des résidus de pâte lors du chargement ou du déchargement de la cuve. Ensuite, il a été constaté qu'un tel joint a tendance à se détacher du bord de la cuve après un certain nombre d'ouvertures et de fermetures du couvercle, ce qui oblige à remplacer ce joint périodiquement. Enfin, sa présence peut rendre le bord de la cuve sensiblement attachant, ce qui, outre le risque d'encrassement susmentionné, en rend l'opération de nettoyage plus difficile.

La présente invention pallie les inconvénients susmentionnés en proposant un dispositif de division automatique de pâte dans lequel aucun joint d'étanchéité n'est disposé au niveau du bord supérieur de la cuve et aucun contact substantiel entre un joint d'étanchéité et un contenu de la cuve n'est aisément possible à aucun moment de son chargement ou déchargement.

Dès lors, le dispositif selon l'invention comprend une cuve agencée pour recevoir un volume de pâte à découper, ladite cuve étant pourvue d'un fond et d'un couvercle mobile pouvant être déplacé entre une première position de fermeture de la cuve par ledit couvercle et une seconde position d'ouverture de la cuve, le fond de la cuve pouvant être déplacé dans la cuve axialement à cette dernière pour y compresser ledit volume de pâte, le dispositif comprenant en outre un ensemble de lames de découpe de pâte en pâtons pouvant être introduites dans la cuve et retirées de celle-ci par des fentes pratiquées dans le fond de ladite cuve, un anneau périphérique étant agencé autour du bord supérieur de la cuve de sorte que celui-ci constitue une saillie relativement audit anneau et la face du couvercle opposée au bord supérieur de la cuve en position de fermeture dudit couvercle est munie d'un joint périphérique d'étanchéité agencé pour être comprimé entre ladite face et ledit anneau en position de fermeture du couvercle de sorte que ladite saillie affleure ladite face du couvercle.

Grâce à la configuration particulière selon l'invention de l'anneau, du joint et du couvercle de la cuve, le joint n'est pas disposé au niveau du bord de la cuve mais du couvercle ce qui élimine les inconvénients mentionnés ci-dessus associés à la présence d'un joint d'étanchéité fixé au bord supérieur de la cuve.

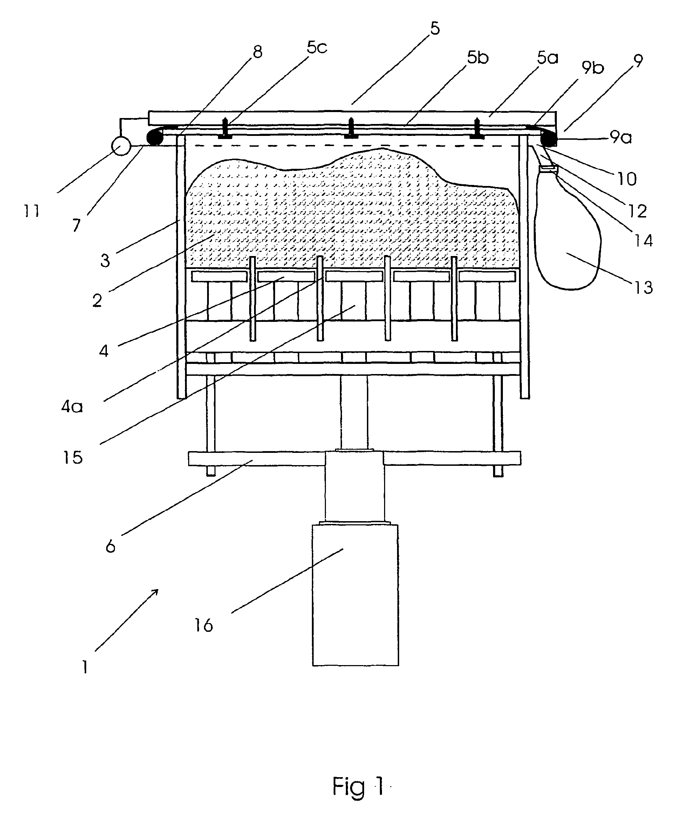

L'invention va à présent être décrite plus en détails au moyen d'un exemple de mode de réalisation non limitatif de la portée de ladite invention et en référence à la figure 1 jointe représentant une vue schématique en coupe transversale d'un dispositif selon l'invention en position de fermeture de son couvercle.

En se rapportant à la figure 1, le dispositif 1 de découpe automatique d'un volume de pâte 2 en pâtons comprend une cuve 3 agencée pour recevoir un volume de pâte 2 à découper, ladite cuve 3 étant pourvue d'un fond 4 et d'un couvercle mobile 5 pouvant être déplacé par pivotement autour d'un pivot 11 entre une première position de fermeture de la cuve 3 par ledit couvercle 5 et une seconde position d'ouverture de la cuve 3, le fond 4 de la cuve 3 pouvant être déplacé dans la cuve axialement à cette dernière au moyen d'un premier vérin hydraulique 15 actionné par un moteur (non représenté) pour y compresser ledit volume de pâte 2, le dispositif comprenant en outre un ensemble 6 de lames de découpe du volume de pâte 2 en pâtons pouvant être introduites dans la cuve et retirées de celle-ci au moyen d'un second vérin hydraulique 16, par des fentes 4a pratiquées dans le fond 4 de ladite cuve 3. Un anneau périphérique 7 est agencé autour du bord supérieur de la cuve de sorte que celui-ci constitue une saillie 8 relativement audit anneau et la face du couvercle 5 opposée au bord supérieur de la cuve en position de fermeture dudit couvercle 5 est munie d'un joint périphérique 9 d'étanchéité, agencé pour être comprimé entre ladite face et ledit anneau 7 en position de fermeture du couvercle 5 de sorte que ladite saillie 8 affleure ladite face du couvercle 5. Le couvercle 5 comprend une première 5a et une seconde 5b partie de forme correspondante, lesdites parties constituées de disques sensiblement concentriques assemblées par des vis 5c ou d'autres moyens équivalents. Le diamètre de la seconde partie 5b dudit couvercle 5 est inférieur à celui de la première 5a et le joint 9 comprend un bourrelet 9a de matériau résilient et une lèvre 9b agencée pour être maintenue par compression entre lesdites première 5a et seconde 5b parties du couvercle 5 de sorte que le bourrelet 9a du joint 9 soit disposé sous la première partie de couvercle 5a et puisse être compressé entre celle-ci et l'anneau 7 en position de fermeture du couvercle 5. Au moins un orifice 10 est pratiqué dans l'anneau périphérique 7 et au moins une échancrure (non représentée) est pratiquée dans la saillie 8. Une telle échancrure peut par exemple présenter la forme d'une encoche en "V" pratiquée sur toute la hauteur de la saillie 8 ou sur seulement une partie de cette hauteur, la teille d'une échancrure étant maintenue suffisamment petite pour qu'au cours de l'opération de compression du volume de pâte dans la cuve 3, de la pâte ne se répande pas à l'extérieur de la paroi de la cuve par une échancrure en question. De telles échancrures peuvent être pratiquées espacées les unes des autres sur tout le pourtour de la saillie 8. En multipliant ainsi le nombre des échancrures ou peut en diminuer la taille tout en maintenant un passage d'air et de farine suffisant de l'intérieur vers l'extérieur de la cuve via ces échancrures. Le diamètre du joint périphérique 9 est choisi de sorte qu'en position de fermeture du couvercle 5, chaque orifice 10 soit disposé entre le joint 9 et ladite saillie 8 de sorte à délimiter en position de fermeture du couvercle 5 un canal d'évacuation d'air et de farine de l'intérieur vers l'extérieur de la cuve 3, via chaque échancrure et chaque orifice 10. Chaque orifice 10 pratiqué dans l'anneau 7 est ouvert sur un conduit 12 aboutissant dans au moins un réceptacle 13 constitué d'un sac ajusté au bout 14 dudit conduit 12.
Grâce au dispositif selon l'invention qui vient d'être décrit, le joint d'étanchéité qu'il comprend n'est pas solidaire du bord supérieur de la cuve ce qui évite les inconvénients que cela entraîne ainsi qu'exposé plus haut. En outre, il est très aisé de remplacer ce joint une fois usé en désolidarisant les deux parties du couvercle pour décompresser la lèvre du joint qu'elles enserrent et ainsi pouvoir facilement l'extraire du couvercle.

## Revendications

1. Dispositif (1) de découpe automatique de pâte en pâtons comprenant une cuve (3) agencée pour recevoir un volume (2) de pâte à découper, ladite cuve (3) étant pourvue d'un fond (4) et d'un couvercle (5) mobile pouvant être déplacé entre une première position de fermeture de la cuve (3) par ledit couvercle (5) et une seconde position d'ouverture de la cuve (3), le fond (4) de la cuve (3) pouvant être déplacé dans la cuve (3) axialement à cette dernière pour y compresser ledit volume (2) de pâte, le dispositif (1) comprenant en outre un ensemble (6) de lames de découpe de pâte en pâtons pouvant être introduites dans la cuve (3) et retirées de celle-ci par des fentes (4a) pratiquées dans le fond (4) de ladite cuve (3),
**caractérisé en ce que**
un anneau périphérique (7) est agencé autour du bord supérieur de la cuve (3) de sorte que celui-ci constitue une saillie (8) relativement audit anneau et **en ce que** la face du couvercle (5) opposée au bord supérieur de la cuve (3) en position de fermeture dudit couvercle (5) est munie d'un joint périphérique d'étanchéité (9) agencé pour être comprimé entre ladite face et ledit anneau (7) en position de fermeture du couvercle (5) de sorte que ladite saillie (8) affleure ladite face du couvercle (5).

2. Dispositif (1) selon la revendication 1, **caractérisé en ce qu**'au moins un orifice (10) est pratiqué dans ledit anneau périphérique (7) et au moins une échancrure est pratiquée dans ladite saillie (8) et en ce que le diamètre du joint périphérique (9) est choisi de sorte qu'en position de fermeture du couvercle (5), ledit orifice (10) soit disposé entre le joint (9) et ladite saillie (8).

3. Dispositif (1) selon l'une quelconque des revendications précédentes, **caractérisé en ce que** ledit couvercle (5) comprend une première (5a) et une seconde (5b) partie de forme correspondante et **en ce que** ledit joint (9) comprend une lèvre (9b) agencée pour être maintenue par compression entre lesdites première (5a) et seconde (5b) parties du couvercle (5).

4. Dispositif (1) selon la revendication 3, **caractérisé en ce que** lesdites première (5a) et seconde (5b) parties sont des disques sensiblement concentriques et **en ce que** le diamètre de la seconde partie (5b) est inférieur à celui de la première (5a).

5. Dispositif (1) selon l'une quelconque des revendications précédentes, **caractérisé en ce que** le joint (9) comprend un bourrelet (9a) de matériau résilient.

6. Dispositif (1) selon l'une quelconque des revendications 2 à 5, **caractérisé en ce que** chaque orifice (10) pratiqué dans l'anneau (7) est ouvert sur un conduit (12) aboutissant dans au moins un réceptacle (13).

7. Dispositif (1) selon la revendication 6, **caractérisé en ce que** ledit réceptacle (13) est constitué d'un sac ajusté au bout (14) dudit conduit (12).

## Claims

1. Device (1) for the automatic cutting of dough into pieces, comprising a trough (3) arranged so as to receive a volume (2) of dough to be cut, the said trough (3) being provided with a bottom (4) and a movable lid (5) able to be moved between a first position of closure of the trough (3) by the said lid (5) and a second position of opening the trough (3), the bottom (4) of the trough (3) being able to be moved in the trough (3) axially to the latter in order to compress therein the said volume (2) of dough, the device (1) also comprising a set (6) of blades for cutting dough into pieces able to be introduced into the trough (3) and removed therefrom through slots (4a) formed in the bottom (4) of the said trough (3), **characterised in that**
a peripheral ring (7) is arranged around the top edge of the trough (3) so that the latter constitutes a projection (8) relative to the said ring and **in that** the face of the lid (5) opposite to the top edge of the trough (3) in the closed position of the said lid (5) is provided with a peripheral seal (9) arranged so as to be compressed between the said face and the said ring (7) in the closed position of the lid (5) so that the said projection (8) fits flush with the said face of the lid (5).

2. Device (1) according to claim 1, **characterised in that** at least one orifice (10) is formed in the said peripheral ring (7) and at least one scallop is formed in the said projection (8) and **in that** the diameter of the peripheral seal (9) is chosen so that, in the closed position of the lid (5), the said orifice (10) is disposed between the seal (9) and the said projection (8).

3. Device (1) according to any one of the preceding claims, **characterised in that** the said lid (5) comprises a first (5a) and a second (5b) part with corresponding shapes and **in that** the said seal (9) comprises a lip (9b) arranged so as to be held by compression between the said first (5a) and second (5b) parts of the lid (5).

4. Device (1) according to claim 3, **characterised in that** the said first (5a) and second (5b) parts are substantially concentric discs and **in that** the diameter of the second part (5b) is less than that of the first (5a).

5. Device (1) according to any one of the preceding claims, **characterised in that** the seal (9) comprises a rim (9a) of resilient material.

6. Device (1) according to any one of the claims 2 to 5, **characterised in that** each orifice (10) formed in the ring (7) is open onto a conduit (12) ending in at least one receptacle (13).

7. Device (1) according to claim 6, **characterised in that** said receptacle (13) consists of a bag fitted to the end (14) of the said conduit (12).

## Patentansprüche

1. Automatische Vorrichtung (1) zum Schneiden von Teig in Teigstücke, umfassend eine Wanne (3), die derart angeordnet ist, dass sie ein zu schneidendes Teigvolumen (2) aufnimmt, wobei die Wanne (3) mit einem Boden (4) und einem beweglichen Deckel (5) versehen ist, der zwischen einer ersten Position des Verschlusses der Wanne (3) durch den Deckel (5) und einer zweiten Position der Öffnung der Wanne (3) verschoben werden kann, wobei der Boden (4) der Wanne (3) in der Wanne (3) axial zu dieser verschoben werden kann, um darin das Teigvolumen (2) zu komprimieren, wobei die Vorrichtung (1) ferner eine Einheit (6) von Blättchen zum Schneiden des Teiges in Teigstücke umfasst, die durch Schlitze (4a), die im Boden (4) der Wanne (3) vorgesehen sind, in die Wanne (3) eingeführt und aus dieser entnommen werden können, **dadurch gekennzeichnet, dass**
ein Umfangsring (7) um den oberen Rand der Wanne (3) vorgesehen ist, so dass dieser einen Vorsprung (8) in Bezug auf den Ring bildet, und dass die Seite des Deckels (5), die dem oberen Rand der Wanne (3) in Verschlussposition des Deckels (5) gegenüberliegt, mit einer Umfangsdichtung (9) versehen ist, die derart angeordnet ist, dass sie zwischen der Fläche und dem Ring (7) in Verschlussposition des Deckels (5) komprimiert wird, so dass sich der Vorsprung (8) an die Seite des Deckels (5) anlegt.

2. Vorrichtung (1) nach Anspruch 1, **dadurch gekennzeichnet, dass** mindestens eine Öffnung (10) in dem Umfangsring (7) vorgesehen ist und mindestens ein bogenförmiger Ausschnitt in dem Vorsprung (8) vorgesehen ist, und dass der Durchmesser der Umfangsdichtung (9) derart gewählt ist, dass in der Verschlussposition des Deckels (5) die Öffnung (10) zwischen der Dichtung (9) und dem Vorsprung (8) angeordnet ist.

3. Vorrichtung (1) nach einem der vorhergehenden Ansprüche, **dadurch gekennzeichnet, dass** der Deckel (5) einen ersten (5a) und einen zweiten (5b) Teil von entsprechender Form aufweist, und dass die Dichtung (9) eine Lippe (9b) umfasst, die derart angeordnet ist, dass sie durch Kompression des ersten (5a) und zweiten (5b) Teils des Deckels (5) gehalten wird.

4. Vorrichtung (1) nach Anspruch 3, **dadurch gekennzeichnet, dass** der erste (5a) und der zweite (5b) Teil im Wesentlichen konzentrische Scheiben sind, und dass der Durchmesser des zweiten Teils (5b) kleiner als jener des ersten (5a) ist.

5. Vorrichtung (1) nach einem der vorhergehenden Ansprüche, **dadurch gekennzeichnet, dass** die Dichtung (9) einen Wulst (9a) aus einem elastischen material umfasst.

6. Vorrichtung (1) nach einem der Ansprüche 2 bis 5, **dadurch gekennzeichnet, dass** jede in dem Ring (7) vorgesehene Öffnung (10) auf einer Leitung (12), die in mindestens einen Behälter (13) mündet, offen ist.

7. Vorrichtung (1) nach Anspruch 6, **dadurch gekennzeichnet, dass** der Behälter (13) von einem Sack gebildet ist, der am Ende (14) der Leitung (12) aufgesetzt ist.
